# EUROPEAN PATENT SPECIFICATION

(11) **EP 2 543 870 B1**
(45) Date of publication and mention of the grant of the patent: **24.07.2019**
(21) Application number: 12173372.9
(22) Date of filing: 25.06.2012
(51) Int. Cl.: F02M 47/02, F02M 61/04, F02M 61/16, F02M 45/08, F02M 61/18

(54) **A fuel valve for large turbocharged two stroke diesel engines**
Einspritzdüse für Zweitakt-Dieselmotoren mit großem Hubraum und Turboaufladung
Soupape à carburant pour gros moteurs diesel à deux temps avec turbocompresseur

(30) Priority: 27.06.2011 DK 201100480
(43) Date of publication of application: 09.01.2013
(73) Proprietor: MAN Energy Solutions, filial af MAN Energy Solutions SE, Tyskland, 2450 Copenhagen SV (DK)
(72) Inventor: Flarup, Johannes, 2720 Vanløse (DK); Kjemtrup, Niels, 3460 Birkerød (DK)
(74) Representative: Nordic Patent Service A/S

(56) References cited:
- EP-A1- 0 713 004
- EP-A1- 0 789 142
- WO-A1-2008/071188
- DE-A1- 19 755 062
- US-A- 5 152 271
- US-A- 5 526 792
- US-B2- 6 439 483

## Description

The present invention relates to a fuel valve for large turbocharged two-stoke diesel engines, in particular to en electronically controlled fuel valve for the large turbocharged inflow two stroke diesel engines with cross heads.

### BACKGROUND OF THE INVENTION

Large turbocharged two-stroke diesel engines with crossheads are typically used as prime movers in large ocean going ships, such as container ships or in power plants.

These engines are typically provided with two or three fuel valves arranged in each cylinder cover. The fuel valve is provided with a spring biased axially movable valve needle that acts as a movable valve member. When the pressure of the fuel (typically heavy fuel oil) exceeds a preset pressure (typically 350 Bar) the axially movable valve needle is lifted from its seat and the fuel is allowed to flow into the combustion chamber via a nozzle at the front of the fuel valve.

A conventional nozzle has a longitudinal axis that is arranged roughly at an angle of 10 to 15 deg to the direction of the movement of the piston in the cylinder of the engine and the nozzle is provided with a central bore and a plurality of nozzle bores that direct the fuel away from the cylinder walls and into the combustion chamber. Typically, there is a swirl in the air in the combustion chamber at the moment of injection and most of the nozzle bores are directed to inject the fuel with the flow of the swirl although some of the bores may be directed to inject the fuel against the flow of the swirl.

A known fuel valve of this type is the MAN Diesel slide fuel valve that has a design with a minimized sac volume of residual fuel. This known fuel valve has two positions: open with all nozzle holes in use or closed. The position of the axially movable valve needle is controlled by a pressure chamber in the valve housing above the axially movable valve needle. The pressure chamber is permanently connected to a high pressure fuel source via a throttled connection and connected to drain via a closable throttled connection. This construction causes substantial drain losses during valve open time and causes relatively slow closing and opening speeds of the fuel valve.

Ongoing demands for reduced emissions and improved specific fuel consumption require further development of the fuel injection system. Improved accuracy and faster opening and closing movement are key aspects.

Dual fuel engines need injection of relatively small amounts of fuel for pilot injection when the engine is operated with a gaseous fuel. Present technology does not allow an injection valve that is used for fuel oil operation to be used for the pilot injection and vice versa so additional small pilot injection valves are used for the pilot injection, which means that the duel fuel engine has double the amount of fuel valves compared to conventional engines that can only operate on fuel oil.

DE19755062 discloses a fuel valve that has a valve needle moving axially in a bore of a valve body, with a sealing surface acting on the body. There is at least one injection aperture in the valve body wall. A control rod is co-axial with the valve member and ends in a control cavity with at least two run-outs to the fuel return line containing throttles, the second of which, at the side, can be closed by moving the control rod. This fuel valve can operate in two modes. The two different states provide for an opening stroke of the valve needle with two different lengths. In one mode the stroke length is such that all of the bores in the valve needle are open and in the other mode the stroke length is such that only a portion of the bores in the valve needle are open. The length of the stroke is determined by an electronically controlled two-position end stop via the activation and deactivation of an on/off type valve that regulates flow through the second run-out. In a fuel valve with this construction the valve needle cannot assume any desirable position within a range of possible positions and this type of fuel valve does therefore not provide the required very precise and accurate control of the amount of fuel that is injected.

### DISCLOSURE OF THE INVENTION

On this background, it is an object of the present application to provide a fuel valve that is able to at least partially meet the demands indicated above and at least partially overcome the problems indicated above.

This object is achieved by providing a fuel valve for injecting fuel into the combustion chamber of a large two stroke diesel engine, the fuel valve comprising: a fuel valve housing, an elongated nozzle with a central bore and a closed front, a high pressure fuel inlet port for connection to a source of high pressure fuel, a conduit connecting the high pressure fuel inlet port to the nozzle, a resiliently biased and axially movable valve needle cooperating with a valve seat and configured to control the flow of fuel from the high pressure fuel inlet port to the nozzle, whereby lift of the axially movable valve needle allows flow from the high pressure fuel inlet port to the nozzle, a chamber above the valve seat connected to the conduit to receive pressurized fuel, a plurality of nozzle holes distributed axially and radially over the nozzle, a cut-off shaft moving in unison with the valve needle and received to be axially displaceable in the central bore in the nozzle for opening and closing the nozzle holes, the plurality of nozzle holes being distributed axially such that the number of nozzle holes that are open increases with increased lift of the valve needle and the cut-off shaft so that the amount of lift of the axially movable valve needle determines how many nozzle holes are open and thereby the flow area, an electro-hydraulic linear actuator operably connected to the axially movable valve needle for providing lift of the axially movable valve needle, wherein the electro-hydraulic linear actuator controls the magnitude of the lift of the axially movable valve needle (20) in response to a control signal, the electro-hydraulic linear actuator (43, 46, 53, 70; 120) comprising a linear hydraulic actuator that is operably connected to the valve needle (20), and an electrically operated actuator (85, 141) acting on a proportional hydraulic valve (53,57,58,59,140), the proportional hydraulic valve controlling the flow to and from the linear hydraulic actuator (43,46,53,70; 122,124,126,130).

By providing a relation between the amount of valve lift and the number of nozzle holes that are open during an injection event and by providing a linear actuator it becomes possible to control the number of nozzle holes that are open during an injection event. This is particularly advantageous in connection with the injection of relatively small amounts of fuel oil for pilot injection that is required for dual fuel engines when they are operated with a gaseous fuel such as natural gas. Thus, it becomes possible to use the fuel valves of a large two stroke duel fuel diesel engine that are used for fuel oil (also heavy fuel oil) operation for injection of pilot oil (pilot injection) during gas operation.

By using an electro hydraulic linear actuator the position of the valve needle can be controlled swift and accurately.

In an embodiment the linear actuator controls the magnitude of the lift of the axially movable valve needle in response to a control signal.

In another embodiment, the linear actuator is at least partially integrated into the axially movable valve needle. Hereto, the linear actuator may comprise a linear electric motor operably coupled to an actuation spool received in an axial bore in the axially movable valve needle.

Preferably, the linear actuator comprises a linear electric motor operably coupled to an actuation spool received in an axial bore in an actuation section of the axially movable valve needle and the actuation spool is part of the hydraulic valve and configured to control the flow of fluid to and from the hydraulic linear actuator.

In an embodiment the housing of the linear actuator is rigidly connected to the fuel valve housing and an output shaft of the linear motor is operably connected to the actuation spool.

The fuel valve may further comprise a pressure chamber in the valve housing disposed above the axially movable valve needle for urging the axially movable valve needle towards the valve seat when pressurized, where the actuation spool is configured to either connect the pressure chamber to the high pressure fuel inlet port or to connect the pressure chamber to drain or to close off the pressure chamber, depending on the position of the actuation spool relative to the axially movable valve needle.

Preferably, the actuation spool cooperates with a plurality of ports in the axially movable valve needle, the ports connect the high pressure fuel inlet port, to the drain and to the pressure chamber respectively.

In an embodiment the ports and the actuation spool are configured such that the axially movable valve needle follows the axial movement of the actuation spool relative to the valve housing.

In an embodiment the linear motor provides an output shaft position signal or wherein a position sensor is coupled to the output shaft of the linear motor or to the actuation spool.

In another embodiment the linear actuator provides an output shaft position signal or wherein a position sensor is coupled to the output shaft of the linear actuator or to the actuation spool.

Preferably, the interior of the cut-off shaft is hollow and the hollow interior is connected to the inlet port of the fuel valve when the valve needle is lifted from its seat.

Preferably the flow area through the nozzle holes is determined by the amount of lift of the valve, needle.

In an embodiment the fuel valve includes a pressure chamber in the valve housing disposed above the axially movable valve needle for urging the axially movable valve on needle towards the valve seat when pressurized, the linear electric motor being operably coupled to an actuation spool that is received in an axial bore in the axially movable valve needle with the actuation spool being configured to either connect the pressure chamber to the high pressure fuel inlet port or to connect the pressure chamber to drain or to close off the pressure chamber, depending on the position of the actuation spool relative to the axially movable valve needle.

Further objects, features, advantages and properties of the fuel valve according to the present disclosure will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 is a longitudinal-section of an exemplary embodiment of a fuel valve,
Fig. 2 is a longitudinal-section of another exemplary embodiment of a fuel valve, and
Figs. 3 and 4 show details of exemplary embodiments of the nozzle for use in the fuel valve.

### DETAILED DESCRIPTION OF PREFERRED EMBODIMENTS

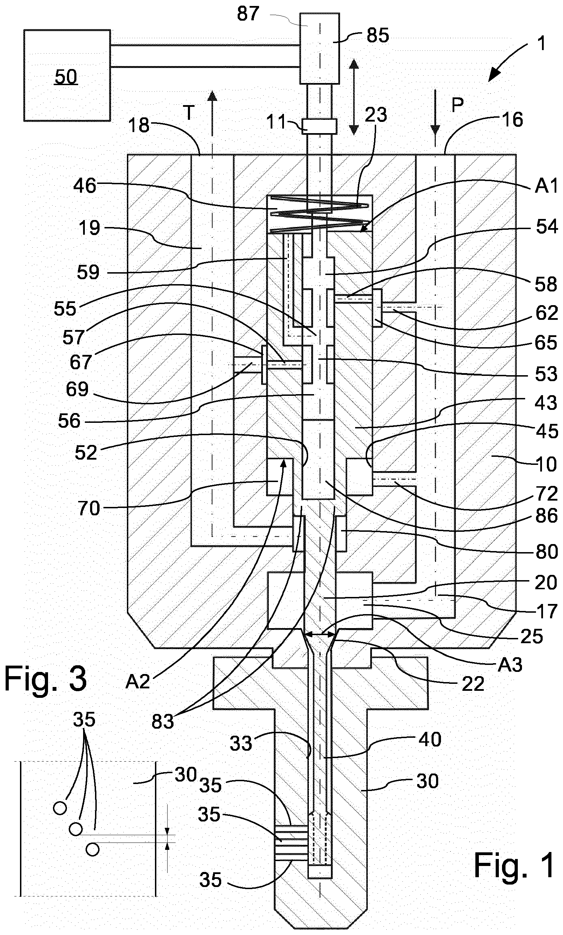

The fuel valve 1 according to an exemplary embodiment illustrated in Fig. 1 has an external housing 10 which at its rearmost end has a fuel inlet port 16 and a fuel outlet port 18. The inlet port 16 is to be connected to a source P of high pressure fuel such as fuel oil, heavy fuel oil from a fuel pump or from a common fuel rail. The outlet port 18 is to be connected to a return line to tank T.

The fuel valve 1 may in a known manner be mounted in the cylinder cover of a large two-stroke diesel engine and be connected with a fuel pump, not shown.

The fuel inlet port 16 is in flow connection with a duct 17. Duct 17 extends to the seat of a valve needle 20 that is axially displaceable in an axial bore in the valve housing 10. The valve needle 20 is biased to its seat 22 by a closing spring 23. The foremost part of the valve housing 10 holds a nozzle 30 that projects from the valve housing 10 and into the combustion chamber of the engine cylinder (not shown) when the fuel valve 1 is mounted on the cylinder cover.

Fig. 1 shows the valve needle 20 resting on the valve seat 22. In this position, fluid flow of fuel from the fuel oil inlet port 16 to the nozzle 30 is blocked. A chamber 25 above the valve seat 22 is connected to duct 17 to receive pressurized fuel.

The valve needle 20 carries a foremost cut-off shaft 40 that is thinner than the rearmost section of the valve needle 20 and the cut-off shaft 40 projects into a central bore 33 in the nozzle 30. Thus, when the valve needle 20 is axially displaced in the bore in the housing 10 the cut-off shaft 40 is axially displaced in the central bore of the nozzle 30.

The nozzle 30 is further provided with a plurality of nozzle holes 35 through which the fuel is injected into the combustion chamber from the central bore 33. Thus, during a fuel injection event a jet of fuel comes from the nozzle holes 35.

In an embodiment, the nozzle holes 35 are drilled into the nozzle. The centerline of each nozzle hole 35 may coincide roughly with the centerline of the central bore 33. However, the centerlines of the nozzle holes 35 do not have to coincide exactly with the centerline of the central bore 33.

The cut-off shaft 40 is in an exemplary embodiment made as one piece of material with the valve needle 20. The cut-off shaft 40 is hollow and the hollow interior of the cut-off shaft 40 connects to the space downstream of the valve seat 22. Thus, when the valve needle 20 is lifted from its seat the flow path extends all the way from the fuel oil inlet 16 to the hollow interior of the cut-off shaft 40.

A duct 19 is connected to the outlet port 18 and the duct 19 collects the return oil flow as will de explained in greater detail hereafter.

The foremost part of the cut-off shaft 40 is cylindrical and fits exactly into the central bore 33.

In an embodiment shown in figure 3 the nozzle holes 35 are distributed over the nozzle 30 so as to distribute them with a distance between the perimeters of neighboring nozzle holes 35 in the axial direction of (negative overlap).

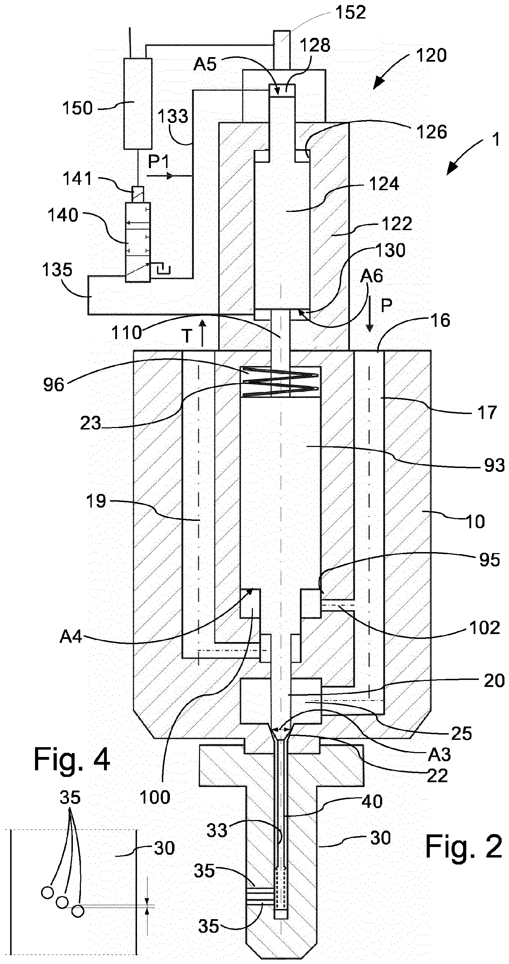

In another embodiment shown in Figure 4 the nozzle holes 35 are distributed over the nozzle 30 so as to distribute them without a distance between the perimeters of neighboring nozzle holes 35 in the axial direction of (positive overlap). The overlap can in en embodiment also be zero.

In its lowermost position the cut off shaft 40 will always close the lowermost holes and can even have a small overlap improving the sealing conditions. Further, the nozzle holes 35 are spread radially and directed radially in different directions so as to cover a wide sector of the combustion chamber with fuel jets coming from the nozzle holes 35 during fuel injection.

Thus, the extent of the lift of the valve needle 20 and the cut-off shaft 40 determines how many of the nozzle holes 35 are open at a given point in time, and thus the extend of the lift of the valve needle 20 determines the flow area through which the fuel is injected into the combustion chamber in atomized form. The greater the lift, the more nozzle holes 35 are open (until the lift has reached a stage where all nozzle holes 35 are open). Thus, the number of nozzle holes 35 that are in use during a fuel injection event can be controlled via the extent of the lift of the valve needle 20 and the cut-off shaft 40.

In an embodiment of the injection valve 1 that is particularly useful for both pilot injection in gas operation and regular fuel oil injection in fuel oil operation, a first group of nozzle holes 35 that are opened during the first part of the opening movement of the valve needle 20, have a relatively small diameter, and the nozzle holes 35 that are opened in the following or second part of the opening movement of the valve needle 20 have a larger diameter than the nozzle holes 35 of the first group. In this embodiment, a small lift of the valve needle 20 opens only the first group of nozzle holes 35 with the relatively small diameter, which creates a small flow through area which is good for injecting small amounts of fuel oil for pilot injection in gas operation of the engine and a larger lift of the valve needle 20 opens both the first group of nozzle holes 35 with the reduced diameter and the other nozzle holes 35 with the larger diameter which creates a large flow through area which is good for regular fuel oil injection in fuel oil operation of the engine. This embodiment is also particularly useful in connection with low load operation (in fuel oil operation) for injection the relatively small amounts of fuel oil that are injected at low load operation.

The valve needle 20 includes an actuation section 43. The actuation section 43 can be an integral part of the valve needle 20 or be connected to the valve needle 20 (in the shown embodiment, the actuation section is integral with the valve needle 20). The actuation section 43 is a substantially cylindrical section that is slidably received in an axial bore 45 in the valve housing 10 so that the actuation section 43 can act like a piston in the valve housing 10. A pressure chamber 46 formed in the upper part (upper as in the drawing) of the valve housing 10 is disposed above the actuation section 43. The spring 23 for urging the valve needle 20 onto its seat 22 is received in the pressure chamber 46, and acts on the top of the actuation section 43. The pressure in pressure chamber 46 acts on the valve needle 20 to urge the latter in the closing direction with an effective surface area A1.

Another pressure chamber 70 for urging the valve needle 20 in the opening direction is located under the actuation section 43 and connected via bore 72 to duct 17. Pressure chamber 70 is therefore always pressurized when the fuel inlet port 16 is connected to a source of pressurized fuel (such as a fuel pump). The pressure in pressure chamber 70 acts on the valve needle 20 to urge the latter in the opening direction with an effective surface area A2.

A concentric axial bore 52 is formed in the actuation section 43. A spool member 53 is slidably received in the axial bore 52. The spool member 53 includes three lands 54,55,56, and the position of the spool member 53 relative to the actuation section 43 controls the flow to and from three ports 57,58,59 that open into the axial bore 52.

Port 57 connects radially through the actuation section 43 to a port 69. Port 69 connects radially to duct 19. A recess 67 in the inner wall of the axial bore 45 ensures that there is a flow connection between port 57 and port 69 in a range of positions of the actuation section 43.

Port 58 connects radially through the actuation section 43 to a port 62. Port 62 connects radially to duct 17. A recess 65 in the inner wall of the axial bore 45 ensures that there is a flow connection between port 58 and port 62 in a range of positions of the actuation section 43.

Port 59 has a radial section and an axial section and connects the interior of the axial bore 52 to pressure chamber 46.

The position of the spool member 53 relative to the actuation section 43 and the position of the actuation section 43 relative to the valve housing 10 determine which of the posts 57,58 and 59 are open and connected to the duct 17 and duct 19 respectively.

A chamber 86 below the spool member 53 is connected to a chamber 80 via bores 83. Chamber 80 is directly connected to duct 19 and therefore chamber 86 is connected to tank T.

The valve seat area equals effective pressure area A3 Pressure area A2 is the only area urging the valve needle 20 in the lifting direction when the valve needle 20 rests on the valve seat 22 and the fuel valve 1 is closed. When the valve needle 20 has lift, both effective pressure area A2 and effective pressure are A3 urge the valve needle 20 in the lift direction. In order to be able to return the valve needle 20 to the valve seat 22 the force of the spring 46 in combination with the hydraulic force on effective pressure surface A1 must be larger than the combined hydraulic force of effective pressure surfaces A2 and A3.

The effective pressure area for lifting the valve needle 20 is the result of areas A1, A2 and A3, i.e. A2 + A3 acts in the opening direction and A1 acts in the closing direction.

The spool member 53 is connected to a linear actuator, i.e. a linear electric motor 85 via a coupling 11. The linear electric motor 85 determines the position of the spool member relative to the valve housing 10. The linear actuator 85 is coupled to an electronic control unit 50, for example the electronic control unit of the engine. The linear actuator includes a position sensor 87. In the present embodiment the linear actuator is an electric actuator, i.e. a linear electric motor 85. The electronic control unit 50 receives a position signal from the position sensor 87 in the linear actuator 85 and the electronic control unit 50 is therefore informed of the position of the linear actuator 85 and of the valve needle 20 and a closed loop control circuit is formed.

The pressure in pressure chamber 70 acting on the effective pressure surface A2 and when there is valve lift also on effective pressure area A3 urge the valve needle 20 against the action of the spring 23 in the opening direction. Effective pressure area A1 is larger than the sum of effective pressure areas A2 and A3.

The configuration of the spool member 53, the actuation member 43 and the various bores and ports is such that pressure chamber 46 is connected to drain (tank T) via bore 59, bores 57 and 67 and duct 19 when the spool member 53 is lifted. Thus, the pressure in pressure chamber 46 will fall if the spool member 53 is lifted by the linear actuator 85. When the linear actuator 85 moves the spool member 53 down a connection is established between duct 17 and pressure chamber 46 and the pressure in the pressure chamber 46 will rise and since effective pressure area A1 is larger than the sum of effective pressure areas A2 and A3 the valve needle will be urged to close, further assisted by the spring 23.

Thus, the valve needle 20 will move the same distance and direction as the linear actuator 85 has moved the spool member 53 up or down.

In operation, the electronic control unit 50 determines on the basis of various parameters such as engine load and speed the shape (rate shaping) and timing of the next injection event for a given cylinder. On the basis of the calculated profile for the rate shaping the electronic control unit determines what the extent of the lift of the valve needle 20 has to be at a given point in time. The electronic control unit instructs the linear actuator 85 to move to the determined position at a given point in time. When the valve lift is to be increased the electronic control unit commands the linear actuator 85 accordingly and vice versa.

The extent of the valve needle lift as controlled by the electronic control unit determines how many of the nozzle bores 35 are open during the fuel injection event or during a portion of the fuel injection event and the pressurized fuel is injected into the combustion chamber through the open holes 35. During the fuel injection event the electronic control unit commands the linear actuator 85 to follow the determined (rate shaping) curve until the linear actuator 85 has returned to the initial position and the valve needle has returned to its seat 22 and the fuel injection event ends.

The extent of the length of the upward movement of linear actuator 85 from the initial position determines how many of the nozzle holes 35 are open at any point in time during the injection event. The number of nozzle holes 35 used during a fuel injection event can thus be controlled individually for each fuel valve 1 and for each injection event and allows the number of nozzle holes 35 used during an injection event to be adapted to circumstances. Thus, the embodiment according to Figure 1 includes an electro-hydraulic linear actuator 43,46,53,70;120 operably connected to the axially movable valve needle for providing lift of the axially movable valve needle, and the linear actuator controls the magnitude of the lift of the axially movable valve needle in response to a control signal. The fuel valve 1 includes an electro-hydraulic actuator that includes an electrically operated actuator 85 acting on a hydraulic valve 43,57,58,59, and the hydraulic valve controls the flow to and from the linear hydraulic actuator 43,46,70 like a proportional valve. The hydraulic linear actuator is operably connected to the valve needle 20

Fig. 2 illustrates another exemplary embodiment of the fuel valve 1. The fuel valve 1 illustrated in Fig. 2 has an external housing 10 which at its rearmost end has a fuel inlet port 16 and a fuel outlet port 18. The inlet port 16 is to be connected to a source P of high pressure fuel such as fuel oil, heavy fuel oil or gaseous fuel such as natural gas from a fuel pump or from a common fuel rail. The outlet port 18 is to be connected to a return line to tank T.

The fuel valve 1 may in a known manner be mounted in the cylinder cover of a large two-stroke diesel engine and be connected with a fuel pump (not shown).

The fuel inlet port 16 is in flow connection with a duct 17. Duct 17 extends to the seat of a valve needle 20 that is axially displaceable in an axial bore in the valve housing 10. The valve needle 20 is biased to its seat 22 by a closing spring 23. The foremost part of the valve housing 10 holds a nozzle 30 that projects from the valve housing 10 and into the combustion chamber of the engine cylinder (not shown) when the fuel valve 1 is mounted on the cylinder cover.

Fig. 2 shows the valve needle 20 resting on the valve seat 22. In this position the flow of fuel from the fuel oil inlet port 16 to the nozzle 30 is blocked. A chamber 25 above the valve seat 22 is connected to duct 17 to receive pressurized fuel.

The valve needle 20 carries a foremost cut-off shaft 40 that is thinner than the rearmost section of the valve needle 20 and the cut-off shaft 40 projects into a central bore 33 in the nozzle 30. Thus, when the valve needle is axially displaced in the bore in the housing 10 the cut-off shaft 40 is axially displaced in the central bore of the nozzle 30.

The nozzle 30 is further provided with a plurality of nozzle holes 35 through which the fuel is injected into the combustion chamber from the central bore 33. Thus, during a fuel injection event a jet of fuel comes from the nozzle holes 35.

In an embodiment the nozzle holes 35 are drilled into the nozzle. The centerline of each nozzle hole 35 may coincide roughly with the centerline of the central bore 33. However, the centerlines of the nozzle holes 35 do not have to coincide exactly with the centerline of the central bore 33.

The cut-off shaft 40 is in an exemplary embodiment made as one piece of material with the valve needle 20. The cut-off shaft 40 is hollow and the hollow interior of the cut-off shaft 40 connects to the space downstream of the valve seat 22. Thus, when the valve needle 20 is lifted from its seat, the flow path 17 extends all the way from the fuel oil inlet 16 to the hollow interior of the cut-off shaft 40. A duct 19 is connected to the outlet port 18 and the duct 19 collects the return oil flow as will de explained in greater detail further hereafter.

The foremost part of the cut-off shaft 40 is cylindrical and fits exactly into a central bore 33 in the nozzle 30. The angular position of the valve needle 20, and thereby the cut-off shaft 40 is fixed by a pin (not shown) that prevents the valve needle 20 from rotating relatively to the valve housing 10.

In an embodiment the nozzle holes 35 are distributed over the nozzle 30 so as to distribute them with a space between them along the longitudinal extent of the nozzle, i.e. in an axial direction. In its lowermost position the cut off shaft 40 will always close the lowermost holes and can even have a small overlap improving the sealing conditions. Further, the nozzle holes 35 are spread radially and directed radially in different directions so as to cover a wide sector of the combustion chamber with fuel jets coming from the nozzle holes 35.

Thus, the extent of the lift of the valve needle 20 and the cut-off shaft 40 determines how many of the nozzle holes 35 are open at a given point in time, and thus the extent of the lift of the valve needle 20 determines the flow area through which the fuel is atomized. The greater the lift the more nozzle holes 35 are open (until the lift has reached a stage where all nozzle holes 35 are open). Thus, the number of nozzle holes 35 that are in use during a fuel injection event can be controlled via the extent of the lift of the valve needle 20 and the cut-off shaft 40.

In an embodiment of the injection valve 1 that is particularly useful for both pilot injection in gas operation and regular fuel oil injection in fuel oil operation a first group of nozzle holes 35 that are opened during the first part of the opening movement of the valve needle 20 have a relatively small diameter and the nozzle holes 35 that are opened in the following or second part of the opening movement of the valve needle 20 have a larger diameter than the nozzle holes 35 of the first group. In this embodiment, a small lift of the valve needle 20 opens only the first group of nozzle holes 35 with the relatively small diameter, which creates a small flow through area which is good for injecting small amounts of fuel oil for pilot injection in gas operation of the engine and a larger lift of the valve needle 20 opens both the first group of nozzle holes 35 with the reduced diameter and the other nozzle holes 35 with the larger diameter which creates a large flow through area which is good for regular fuel oil injection in fuel oil operation of the engine. This embodiment is also particularly useful in connection with low load operation (in fuel oil operation) for injection the relatively small amounts of fuel oil that are injected at low load operation.

The valve needle 20 includes an actuation section 93. The actuation section 93 can be an integral part of the valve needle 20 or be connected to the valve needle 20 (in the shown embodiment the actuation section is integral with the valve needle 20). The actuation section 93 is a substantially cylindrical section that is slidably received in an axial bore 95 in the valve housing 10 so that the actuation section 93 can act like a piston in the valve housing 10. A chamber 96 formed in the upper (or rear) part (upper as in the drawing) of the valve housing 10 is disposed above the actuation section 93 and a spring 23 for urging the valve needle 20 onto its seat 22 is received in the chamber 96 and acts on the top of the actuation section 93.

A pressure chamber 100 for urging the valve needle 20 in the opening direction is located under the actuation section 93 and connected via bore 102 to duct 17. Pressure chamber 100 is therefore always pressurized when the fuel inlet port 16 is connected to the source of pressurized fuel (such as a fuel pump). The pressure in pressure chamber 100 acts with an effective surface A4 on the valve needle 20 to urge the latter in the opening direction. For proper operation the combined hydraulic force on effective pressure surfaces A3 and A4 must be smaller than the combination of the hydraulic force on effective pressure area A5 and the force applied by the spring 96, otherwise the fuel valve will not be able to close.

The actuation section 93 is connected to an electro hydraulic actuator 120 via a connection shaft 110. The electro hydraulic actuator 120 includes an actuator housing 122. An actuation piston 124 is slidably received in a cylindrical bore 126. The actuation piston 124 has also a reduced diameter section that is partially received in a reduced diameter section of the cylindrical bore 126. A first actuation chamber 128 is formed above the reduced diameter section of the actuation piston 124. The first actuation chamber 128 acts on the actuation piston 124 with an effective surface area A5 to urge the actuation piston in a downward direction (downward as in the figures). A second actuation chamber 130 is formed below the actuation piston 124. The second actuation chamber 130 acts on the actuation piston 124 with an effective surface area A6. The areas A5 and A6 are variable depending on the size of the actuator, and the effective surface area A6 of the second actuation chamber 130 is double the area A5 of the effective surface area of the first actuation chamber 128, i.e. A4 = ½A5. The connection shaft 110 extends through the actuator housing 122 and to the second actuation chamber 130 and connects to the actuation piston 124.

The first actuation chamber 128 is permanently connected to a source of pressure P1 (such as the fuel pump) via a conduit 133. The second actuation chamber 130 is connected to a proportional pilot valve 140 via a conduit 135. The proportional pilot valve 140 has two extreme positions and one middle position. In the first extreme position the proportional pilot valve 140 connects the second actuation chamber 130 to tank T. In the middle position in the proportional pilot 140 is closed and in the second extreme position the pilot valve 140 connects the second actuation chamber 130 to the source of pressure P1. The proportional pilot valve 140 can shift gradually between these three positions. The position of the proportional pilot valve is determined by an electronic control unit 150, such as electronic control unit of the engine.

The electronic control unit 150 receives information about the position of the actuation piston via a position sensor 152 in the electro hydraulic actuator 120 to establish a closed loop control circuit for controlling the position of the electro-hydraulic actuator 120 and thereby the position and extent of lift of the valve needle 20.

In operation, the electronic control unit 150 determines on the basis of various parameters such as engine load and speed the shape (rate shaping) and timing of the next injection event for a given cylinder. On the basis of the calculated profile for the rate shaping the electronic control unit 150 determines what the extent of the lift of the valve needle 20 has to be at a given point in time. The electronic control unit 150 instructs the electro-hydraulic actuator 120 to move to the determined position at a given point in time. When the valve lift is to be increased the electronic control unit 150 commands the proportional pilot valve 140 to connect the second actuation chamber 130 to the source of pressure P1 until the desired position is obtained. When the second actuation chamber 130 is connected to tank the actuation piston 124 will move upwards (upwards as in the drawings) since the effective pressure area A6 associated with the second actuation chamber 130 that acts in the opening direction is larger than the sum of the effective pressure areas A5 associated with the first actuation chamber 128 and the effective pressure area A4 associated with pressure chamber 100.

Thus, the actuation piston 124 the valve needle 20 moves up from an initial position (for example the closed position of the fuel valve) a distance determined by the electronic control unit 150 and the valve needle 20 is lifted from its seat 22 with the same distance as movement of the actuation piston 124 (in the initial position of the actuation piston 124 the valve needle 20 may rest on its seat 22). The extent of the valve needle lift as controlled by the electronic control unit 150 determines how many of the nozzle bores 35 are open during the fuel injection event or during a portion of the fuel injection event and the pressurized fuel is injected into the combustion chamber through the open holes 35. During the fuel injection event the electronic control unit 150 commands the electro hydraulic actuator 120 to follow the determined curve until the actuation piston 124 has returned to the initial position and the valve needle has returned to its seat 22 and the fuel injection event ends.

The extent of the length of the upward movement of the electro-hydraulic actuator 120 from the initial position determines how many of the nozzle holes 35 are open at any point in time during the injection event and thereby the flow through area through the nozzle holes is determined. The number of nozzle holes 35 used during fuel injection event can thus be controlled individually for each fuel valve 1 and for each injection event and allows the number of nozzle holes 35 used during an injection event to be adapted to circumstances.

Thus, the fuel valve according to the embodiment shown in Figure 2 includes an electro-hydraulic linear actuator 120,122,124,140,141, operably connected to said axially movable valve needle 20 for providing lift of the axially movable valve needle, whereby the linear actuator controls the magnitude of the lift of the axially movable valve needle 20 in response to a control signal. The electro-hydraulic actuator comprises an electrically operated actuator 141 acting on a proportional hydraulic valve 140 and the proportional hydraulic valve controls the flow to and from a linear hydraulic actuator 122,124,126,130 that is operably connected to the valve needle 20.

The teaching of this disclosure has numerous advantages. Different embodiments or implementations may yield one or more of the following advantages. It should be noted that this is not an exhaustive list and there may be other advantages which are not described herein. One advantage of the teaching of this disclosure is that it provides for a fuel valve for a large two-stroke diesel engine that allows for and optimal number of nozzle bores to be open during an injection event. It is another advantage of the fuel valve that it allows for precise control of a fuel injection event. It is another advantage of the present fuel valve that it can be used for pilot injection during gaseous fuel operation and for regular fuel injection with fuel oil or heavy fuel oil. It is another advantage of the present disclosure that it provides for a fuel valve that allows small diameter nozzle bores to be used with pilot injection during gaseous fuel operation and large diameter nozzle holes to be used when operating on fuel oil or heavy fuel oil.

Although the teaching of this application has been described in detail for purpose of illustration, it is understood that such detail is solely for that purpose, and variations can be made therein by those skilled in the art without departing from the scope of the teaching of this application.

The term "comprising" as used in the claims does not exclude other elements or steps. The term "a" or "an" as used in the claims does not exclude a plurality. The single processor or other unit may fulfill the functions of several means recited in the claims.

## Claims

1. A fuel valve (1) for injecting fuel into the combustion chamber of a large two stroke diesel engine, said fuel valve comprising:
a fuel valve housing (10),
an elongated nozzle (30) with a central bore (33) and a closed front,
a high pressure fuel inlet port (16) for connection to a source of high pressure fuel (P),
a conduit (17) connecting the high pressure fuel inlet port (16) to the nozzle (30),
a resiliently biased and axially movable valve needle (20) cooperating with a valve seat (22) and configured to control the flow of fuel from the high pressure fuel inlet port (16) to the nozzle (30), whereby lift of the axially movable valve needle (20) allows flow from the high pressure fuel inlet port to the nozzle (30),
a chamber (25) above the valve seat (22) connected to said conduit (17) to receive pressurized fuel,
a plurality of nozzle holes (35) distributed axially and radially over the nozzle (30),
a cut-off shaft (40) moving in unison with the valve needle (20) and received to be axially displaceable in the central bore (33) in the nozzle (30) for opening and closing the nozzle holes (35),
said plurality of nozzle holes (35) being distributed axially such that the number of nozzle holes that are open increases with increased lift of the valve needle (20) and the cut-off shaft (40) so that the amount of lift of the axially movable valve needle (20) determines how many nozzle holes are open and thereby the flow area, and
**characterized by**
an electro-hydraulic linear actuator (43,46,53,70;120) operably connected to said axially movable valve needle for providing lift of the axially movable valve needle, wherein the electro-hydraulic linear actuator controls the magnitude of the lift of the axially movable valve needle (20) in response to a control signal, and by
the electro-hydraulic linear actuator (43,46,53,70;120) comprising a linear hydraulic actuator that is operably connected to the valve needle (20), an electrically operated actuator (85, 141) acting on a proportional hydraulic valve (53,57,58,59,140), and said proportional hydraulic valve controlling the flow to and from said linear hydraulic actuator (43,46,53,70; 122,124,126,130).

2. A fuel valve (1) according to claim 1, wherein the electro-hydraulic linear actuator (43,46,53,70) is at least partially integrated into the axially movable valve needle (20).

3. A fuel valve (1) according to claim 2, wherein the linear actuator comprises a linear electric motor (85) operably coupled to an actuation spool (53) received in an axial bore (52) in an actuation section (43) of the axially movable valve needle (20) and said actuation spool (53) is part of said hydraulic valve and configured to control the flow of fluid to and from said hydraulic linear actuator.

4. A fuel valve (1) according to claim 3, wherein the housing of the linear actuator is rigidly connected to the fuel valve housing (10) and an output shaft of the linear motor is operably connected to the actuation spool (53) .

5. A fuel valve (1) according to claim 3 or 4, further comprising a pressure chamber (46) in the valve housing (10) disposed above the axially movable valve needle for urging the axially movable valve needle (20) towards the valve seat (22) when pressurized, where said actuation spool (53) is configured to either connect the pressure chamber to the high pressure fuel inlet port (16) or to connect the pressure chamber to drain or to close off the pressure chamber, depending on the position of the actuation spool relative to the axially movable valve needle.

6. A fuel valve (1) according to any one of claims 3-5, wherein the actuation spool (53) cooperates with a plurality of ports in the axially movable valve needle (20), said ports connect the high pressure fuel inlet port (16), to the drain and to the pressure chamber respectively.

7. A fuel valve (1) according to any one of claims 3 to6, wherein the ports and the actuation spool are configured such that the axially movable valve needle follows the axial movement of the actuation spool relative to the valve housing (10).

8. A fuel valve (1) according to any one of claims 1 to7, wherein the linear motor (85,141) provides an output shaft position signal or wherein a position sensor is coupled to an output shaft of the linear motor or to the actuation spool (53).

9. A fuel valve (1) according to any one of claims 1 to7, wherein the linear actuator provides an output shaft position signal or wherein a position sensor is coupled to an output shaft of the linear actuator or to the actuation spool.

10. A fuel valve (1) according to any one of claims 1 to 9, wherein the interior of the cut-off shaft (40) is hollow and the hollow interior is connected to the inlet port (16) of the fuel valve (1) when the valve needle (20) is lifted from its seat (22).

11. A fuel valve (1) according to any one of claims 1 to 10, wherein the flow area through the nozzle holes is determined by the amount of lift of the valve needle.

12. A fuel valve (1) according to claim 1, further comprising:
a pressure chamber (46) in the valve housing (10) disposed above the axially movable valve needle for urging the axially movable valve on needle towards the valve seat when pressurized,
the linear electric motor (85) being operably coupled to an actuation spool (53) that is received in an axial bore (52) in the axially movable valve needle (20) with said actuation spool (53) being configured to either connect the pressure chamber (46) to the high pressure fuel inlet port (16) or to connect the pressure chamber (46) to drain or to close off the pressure chamber (46), depending on the position of the actuation spool (53) relative to the axially movable valve needle (20).

## Patentansprüche

1. Kraftstoffventil (1) zum Einspritzen von Kraftstoff in die Verbrennungskammer eines großen Zweitakt-Dieselmotors, wobei das Kraftstoffventil Folgendes umfasst:
ein Kraftstoffventilgehäuse (10),
eine längliche Düse (30) mit einer zentralen Bohrung (33) und einer geschlossenen Vorderseite,
eine Hochdruck-Kraftstoffeinlassöffnung (16) zur Verbindung mit einer Hochdruckkraftstoffquelle (P),
eine Leitung (17), die die Hochdruck-Kraftstoffeinlassöffnung (16) mit der Düse (30) verbindet,
eine federnd vorgespannte und axial bewegliche Ventilnadel (20), die mit einem Ventilsitz (22) zusammenwirkt und konfiguriert ist, den Kraftstoffstrom von der Hochdruckkraftstoff-Einlassöffnung (16) zu der Düse (30) zu steuern, wodurch ein Hub der axial beweglichen Ventilnadel (20) einen Strom von der Hochdruck-Kraftstoffeinlassöffnung zur Düse (30) zu ermöglicht,
eine Kammer (25) oberhalb des Ventilsitzes (22), die mit der Leitung (17) verbunden ist, um unter Druck stehenden Kraftstoff aufzunehmen,
mehrere Düsenlöcher (35), die axial und radial über der Düse (30) verteilt sind,
eine Absperrwelle (40), die sich gemeinsam mit der Ventilnadel (20) bewegt und axial verschiebbar in der zentralen Bohrung (33) in der Düse (30) zum Öffnen und Schließen der Düsenlöcher (35) aufgenommen ist,
wobei die mehreren Düsenlöcher (35) axial derart verteilt sind, dass die Anzahl der Düsenlöcher, die offen sind, mit zunehmendem Hub der Ventilnadel (20) und der Absperrwelle (40) zunimmt, sodass die Höhe des Hubs der axial beweglichen Ventilnadel (20) bestimmt, wie viele Düsenlöcher offen sind, und dadurch den Strömungsbereich bestimmt, und
**gekennzeichnet durch**
einen elektrohydraulischen linearen Aktuator (43, 46, 53, 70; 120), der mit der axial beweglichen Ventilnadel betrieblich verbunden ist, um einen Hub der axial beweglichen Ventilnadel zu liefern, wobei der elektrohydraulische lineare Aktuator die Größe des Hubs der axial beweglichen Ventilnadel (20) als Reaktion auf ein Steuersignal steuert, und **dadurch**,
dass der elektrohydraulische lineare Aktuator (43, 46, 53, 70; 120) einen hydraulischen linearen Aktuator umfasst, der mit der Ventilnadel (20) betrieblich verbunden ist, ein elektrisch betriebener Aktuator (85, 141) auf ein proportionales hydraulisches Ventil (53, 57, 58, 59, 140) wirkt und das proportionale hydraulische Ventil den Strom zu und von dem linearen hydraulischen Aktuator (43, 46, 53, 70; 122, 124, 126, 130) steuert.

2. Kraftstoffventil (1) nach Anspruch 1, wobei der elektrohydraulische lineare Aktuator (43, 46, 53, 70) mindestens teilweise in die axial bewegliche Ventilnadel (20) integriert ist.

3. Kraftstoffventil (1) nach Anspruch 2, wobei der lineare Aktuator einen elektrischen Linearmotor (85) umfasst, der betrieblich mit einem Betätigungsschieber (53) gekoppelt ist, der in einer axialen Bohrung (52) in einem Betätigungsabschnitt (43) der axial beweglichen Ventilnadel (20) aufgenommen ist, und der Betätigungsschieber (53) Teil des hydraulischen Ventils und konfiguriert ist, den Fluidstrom zu und von dem linearen hydraulischen Aktuator zu steuern.

4. Kraftstoffventil (1) nach Anspruch 3, wobei das Gehäuse des linearen Aktuators starr mit dem Kraftstoffventilgehäuse (10) verbunden ist und eine Ausgangswelle des Linearmotors mit dem Betätigungsschieber (53) betrieblich verbunden ist.

5. Kraftstoffventil (1) nach Anspruch 3 oder 4, ferner umfassend eine Druckkammer (46) in dem Ventilgehäuse (10), die über der axial beweglichen Ventilnadel angeordnet ist, um die axial bewegliche Ventilnadel (20) im druckbeaufschlagten Zustand in Richtung des Ventilsitzes (22) zu pressen, wobei der Betätigungsschieber (53) konfiguriert ist, entweder die Druckkammer mit der Hochdruck-Kraftstoffeinlassöffnung (16) zu verbinden oder die Druckkammer mit dem Ablass zu verbinden oder die Druckkammer zu verschließen, abhängig von der Position des Betätigungsschiebers relativ zu der axial beweglichen Ventilnadel.

6. Kraftstoffventil (1) nach einem der Ansprüche 3 bis 5, wobei der Betätigungsschieber (53) mit mehreren Öffnungen in der axial beweglichen Ventilnadel (20) zusammenwirkt, wobei die Öffnungen die Hochdruck-Kraftstoffeinlassöffnung (16) mit dem Ablass bzw. mit der Druckkammer verbinden.

7. Kraftstoffventil (1) nach einem der Ansprüche 3 bis 6, wobei die Öffnungen und der Betätigungsschieber derart konfiguriert sind, dass die axial bewegliche Ventilnadel der axialen Bewegung des Betätigungsschiebers relativ zu dem Ventilgehäuse (10) folgt.

8. Kraftstoffventil (1) nach einem der Ansprüche 1 bis 7, wobei der Linearmotor (85, 141) ein Ausgangswellen-Positionssignal liefert, oder wobei ein Positionssensor mit einer Ausgangswelle des Linearmotors oder mit dem Betätigungsschieber (53) gekoppelt ist.

9. Kraftstoffventil (1) nach einem der Ansprüche 1 bis 7, wobei der lineare Aktuator ein Ausgangswellen-Positionssignal liefert, oder wobei ein Positionssensor mit einer Ausgangswelle des linearen Aktuators oder mit dem Betätigungsschieber gekoppelt ist.

10. Kraftstoffventil (1) nach einem der Ansprüche 1 bis 9, wobei das Innere der Absperrwelle (40) hohl ist und das hohle Innere mit der Einlassöffnung (16) des Kraftstoffventils (1) verbunden ist, wenn die Ventilnadel (20) von ihrem Sitz (22) angehoben wird.

11. Kraftstoffventil (1) nach einem der Ansprüche 1 bis 10, wobei der Strömungsbereich durch die Düsenlöcher durch die Höhe des Hubs der Ventilnadel bestimmt wird.

12. Kraftstoffventil (1) nach Anspruch 1, ferner umfassend:
eine Druckkammer (46) in dem Ventilgehäuse (10), die über der axial beweglichen Ventilnadel angeordnet ist, um die axial bewegliche Ventilnadel im druckbeaufschlagten Zustand in Richtung des Ventilsitzes zu pressen,
wobei der elektrische Linearmotor (85) betrieblich mit einem Betätigungsschieber (53) gekoppelt ist, der in einer axialen Bohrung (52) in der axial beweglichen Ventilnadel (20) aufgenommen ist, wobei der Betätigungsschieber (53) konfiguriert ist, entweder die Druckkammer (46) mit der Hochdruck-Kraftstoffeinlassöffnung (16) zu verbinden oder die Druckkammer (46) zum Ablass zu verbinden oder die Druckkammer (46) zu verschließen, abhängig von der Position des Betätigungsschiebers (53) relativ zu der axial beweglichen Ventilnadel (20).

## Revendications

1. Valve de carburant (1) destinée à injecter du carburant dans la chambre de combustion d'un grand moteur diesel à deux temps, ladite valve de carburant comprenant :
un boîtier de valve (10),
une buse allongée (30) avec un alésage central (33) et une partie avant fermée,
un orifice d'entrée de carburant à haute pression (16) pour le raccordement à une source de carburant à haute pression (P),
un conduit (17) reliant l'orifice d'entrée de carburant à haute pression (16) à la buse (30),
une aiguille de valve déplaçable axialement (20) et sollicitée élastiquement, coopérant avec un siège de valve (22) et configurée pour commander l'écoulement de carburant allant de l'orifice d'entrée de carburant à haute pression (16) jusqu'à la buse (30), moyennant quoi un soulèvement de l'aiguille de valve déplaçable axialement (20) permet un écoulement allant de l'orifice d'entrée de carburant à haute pression jusqu'à la buse (30),
une chambre (25) au-dessus du siège de valve (22), laquelle est reliée audit conduit (17) pour recevoir du carburant sous pression,
une pluralité de trous de buse (35) répartis axialement et radialement sur la buse (30),
un arbre sectionné (40) mobile conjointement avec l'aiguille de valve (20) et reçu de manière à être déplaçable axialement dans l'alésage central (33) dans la buse (30) pour ouvrir et fermer les trous de buse (35),
ladite pluralité de trous de buse (35) étant répartis axialement de telle façon que le nombre de trous de buse ouverts augmente avec un soulèvement accru de l'aiguille de valve (20) et de l'arbre sectionné (40), de sorte que la hauteur de soulèvement de l'aiguille de valve déplaçable axialement (20) détermine le nombre de trous de buse ouverts et donc la zone d'écoulement, et
**caractérisée en ce que**
un actionneur linéaire électro-hydraulique (43, 46, 53, 70 ; 120) fonctionnellement relié à ladite aiguille de valve déplaçable axialement pour assurer le soulèvement de l'aiguille de valve déplaçable axialement, l'actionneur linéaire électro-hydraulique commandant l'amplitude du soulèvement de l'aiguille de valve déplaçable axialement (20) en réponse à un signal de commande, et **en ce que**
l'actionneur linéaire électro-hydraulique (43, 46, 53, 70 ; 120) comprend un actionneur hydraulique linéaire fonctionnellement relié à l'aiguille de valve (20), un actionneur fonctionnant électriquement (85, 141) agissant sur une valve hydraulique proportionnelle (53, 57, 58, 59, 140), et ladite valve hydraulique proportionnelle commandant l'écoulement vers et à partir dudit actionneur hydraulique linéaire (43, 46, 53, 70 ; 122, 124, 126, 130) .

2. Valve de carburant (1) selon la revendication 1, dans laquelle l'actionneur linéaire électro-hydraulique (43, 46, 53, 70) est au moins partiellement intégrée dans l'aiguille de valve déplaçable axialement (20).

3. Valve de carburant (1) selon la revendication 2, dans laquelle l'actionneur linéaire comprend un moteur électrique linéaire (85) couplé fonctionnellement à une bobine d'actionnement (53) reçue dans un alésage axial (52) dans une section d'actionnement (43) de l'aiguille de valve déplaçable axialement (20) et ladite bobine d'actionnement (53) fait partie de ladite valve hydraulique tout en étant configurée pour commander l'écoulement de fluide allant vers l'actionneur linéaire hydraulique et quittant celui-ci.

4. Valve de carburant (1) selon la revendication 3, dans laquelle le boîtier de l'actionneur linéaire est relié de façon rigide au boîtier de valve de carburant (10) et un arbre de sortie du moteur linéaire est fonctionnement relié à la bobine d'actionnement (53).

5. Valve de carburant (1) selon la revendication 3 ou 4, comprenant en outre une chambre de pression (46) dans le boîtier de valve (10), disposée au-dessus de l'aiguille de valve déplaçable axialement pour pousser l'aiguille de valve déplaçable axialement (20) vers le siège de valve (22) lorsqu'elle est sous pression, où ladite bobine d'actionnement (53) est configurée soit pour relier la chambre de pression à l'orifice d'entrée de carburant à haute pression (16) ou pour relier la chambre de pression à l'évacuation ou pour fermer la chambre de pression en fonction de la position de la bobine d'actionnement par rapport à l'aiguille de valve déplaçable axialement.

6. Valve de carburant (1) selon l'une quelconque des revendications 3 à 5, dans laquelle la bobine d'actionnement (53) coopère avec une pluralité d'orifices dans l'aiguille de valve déplaçable axialement (20), lesdits orifices reliant l'orifice d'entrée de carburant à haute pression (16) à l'évacuation et à la chambre de pression respectivement.

7. Valve de carburant (1) selon l'une quelconque des revendications 3 à 6, dans laquelle les orifices et la bobine d'actionnement sont configurés de telle façon que l'aiguille de valve déplaçable axialement suit le mouvement axial de la bobine d'actionnement par rapport au boîtier de valve (10).

8. Valve de carburant (1) selon l'une quelconque des revendications 1 à 7, dans laquelle le moteur linéaire (85, 141) fournit un signal de position d'arbre de sortie ou dans laquelle un capteur de position est couplé à un arbre de sortie du moteur linéaire ou à la bobine d'actionnement (53).

9. Valve de carburant (1) selon l'une quelconque des revendications 1 à 7, dans laquelle l'actionneur linéaire fournit un signal de position d'arbre de sortie ou dans laquelle un capteur de position est couplé à un arbre de sortie du moteur linéaire ou à la bobine d'actionnement.

10. Valve de carburant (1) selon l'une quelconque des revendications 1 à 9, dans laquelle l'intérieur de l'arbre sectionné (40) est creux et l'intérieur creux est relié à l'orifice d'entrée (16) de la valve de carburant (1) lorsque l'aiguille de valve (20) est soulevée de son siège (22).

11. Valve de carburant (1) selon l'une quelconque des revendications 1 à 10, dans laquelle la zone d'écoulement à travers les trous de buse est déterminée par la hauteur de soulèvement de l'aiguille de valve.

12. Valve de carburant (1) selon la revendication 1, comprenant en outre :
une chambre de pression (46) dans le boîtier de valve (10), disposée au-dessus de l'aiguille de valve déplaçable axialement pour pousser l'aiguille de valve déplaçable axialement vers le siège de valve lorsque celle-ci est sous pression,
le moteur électrique linéaire (85) étant fonctionnellement couplé à une bobine d'actionnement (53) reçue dans un alésage axial (52) dans l'aiguille de valve déplaçable axialement (20), ladite bobine d'actionnement (53) étant configurée soit pour relier la chambre de pression (46) à l'orifice d'entrée de carburant à haute pression (16) ou pour relier la chambre de pression à l'évacuation ou pour fermer la chambre de pression (46), en fonction de la position de la bobine d'actionnement (53) par rapport à l'aiguille de valve déplaçable axialement (20).
